# EUROPÄISCHE PATENTSCHRIFT

(11) **EP 3 758 164 B1**
(45) Veröffentlichungstag und Bekanntmachung des Hinweises auf die Patenterteilung: **15.03.2023**
(21) Anmeldenummer: 20181617.0
(22) Anmeldetag: 23.06.2020
(51) Int. Cl.: H01R 13/66, G01K 1/18, H01R 43/20, H01R 24/28, H01R 4/18, H01R 103/00

(54) **STECKER**
CONNECTOR
PRISE DE COURANT

(30) Priorität: 25.06.2019 AT 505632019
(43) Veröffentlichungstag der Anmeldung: 30.12.2020
(73) Patentinhaber: Feller GmbH, 2525 Günselsdorf (AT)
(72) Erfinder: HAMMER, Walter, 2601 Sollenau (AT); BRANDSTÄTTER, Dietmar, 2753 Markt Piesting (AT); RENNER, Andreas, 2630 Ternitz (AT)
(74) Vertreter: Gibler & Poth Patentanwälte KG

(56) Entgegenhaltungen:
- EP-A1- 3 093 926
- DE-A1-102015 004 313
- US-A1- 2016 013 597
- US-A1- 2016 104 978
- US-A1- 2019 288 460

## Beschreibung

Die Erfindung betrifft einen Stecker gemäß dem Oberbegriff des Patentanspruches 1.

Es sind Stecker bekannt, welche dazu vorgesehen sind Geräte mit hoher Leistung, wie beispielsweise Ladegeräte für Elektrofahrzeuge, an ein Niederspannungsnetz anzuschließen. Aufgrund der steigenden Verbreitung der Elektromobilität und den Bedarf, Elektrofahrzeuge zuhause mittels eines am Haushaltsnetz anschließbaren Ladegeräts zu laden, besteht ein steigender Bedarf an derartigen Steckern. Aufgrund der für ein Niederspannungsnetz hohen Anschlussleistung kann es beim Laden zu einer Wärmeentwicklung am Stecker kommen. Diese Wärmeentwicklung kann mittels Temperatursensoren überwacht werden, damit im Falle einer zu starken Wärmeentwicklung der Ladestrom reduziert werden kann, um Beschädigungen am Stecker zu verhindern, welche zu Stromunfällen oder einem Brand führen könnten. Die Integration von Temperatursensoren in einem Stecker ist hierbei aus Sicherheitsgründen mit hohen Auflagen verbunden. Einerseits muss gewährleistet sein, dass der Stromkreis mit der Netzspannung und der Sensorstromkreis, deren Versorgungsspannung lediglich einen geringen Bruchteil der Netzspannung ausmacht, elektrisch zuverlässig voneinander getrennt sind. Dies kann beispielsweise durch die Verwendung von elektrisch isolierenden Schrumpfschläuchen erfolgen, mit welchen der Sensorstromkreis gegenüber dem Stromkreis mit der Netzspannung isoliert wird. Weiters ist ein guter thermischer Kontakt zwischen den Kontaktstiften und dem Temperatursensoren erforderlich, damit ein Temperaturanstieg ausreichend schnell erkannt werden kann.

Die US 2016/0013597 A1 zeigt einen elektrischen Stecker mit einem Temperatursensor und einem Gehäuse. Die Kontaktstifte sind in einem Gehäuseteil aus Kunststoff angebracht. Die Kontaktstifte weisen ein freies Ende und ein Anschlussende auf. Elektrische Leiter eines Kabels sind mit den Anschlussenden der Kontaktstifte verbunden. Das Gehäuseteil weist weiters angeformte Strukturen in seinem Innenbereich auf. Die US 2016/0104978 A1 zeigt einen elektrischen Stecker mit einem Temperatursensor und einem Gehäuse. Die Kontaktstifte sind in einem Gehäuseteil aus Kunststoff angebracht und über L-förmig gebogene Leiterflächen mit den elektrischen Leitungen verbunden.

Die L-förmig gebogenen Leiterflächen weisen ein längeres flaches Ende auf, das jeweils mit einer elektrischen Leitung in Kontakt steht, so wie ein kürzeres breiteres Ende mit einem Loch, das jeweils mit den Kontaktstiften in Kontakt stehen. Die EP 3093926 A1 zeigt einen elektrischen Stecker mit mehreren Temperatursensoren und einer Steckerhülle. Die Steckerhülle umgibt ein Einbauteil, dass die Kontaktstifte beabstandet. Die Kontaktstifte umfassen ein Anschlussende und ein planes Ende, dass mittels Schrauben mit den elektrischen Leitungen verbunden ist. Das Einbauteil umfasst eine Aussparung in welcher sich die Temperatursensoren befinden und mittels einer Platte beabstandet sind.

Nachteilig daran ist, dass derartige Stecker sehr aufwendig in der Herstellung sind, und viele Herstellungsschritte manuell zu tätigen sind. Beispielsweise ist die Isolierung des Sensorstromkreises mit Schrumpfschläuchen sehr arbeitsaufwendig und daher bei einer Massenproduktion sehr teuer. Weiters ist bei der Produktion sehr darauf zu achten, dass kleine Fehler ein großes Gefahrpotenzial entwickeln können. Beispielsweise ist bei der Herstellung darauf zu achten, dass bei einem Anschluss der elektrischen Leiter an die Kontaktstifte keine einzelnen Litzen abstehen, welche mit dem Sensorstromkreis in Kontakt kommen könnten oder Durchschlagspannungen reduzieren könnten.

Aufgabe der Erfindung ist es daher einen Stecker der eingangs genannten Art anzugeben, mit welchem die genannten Nachteile vermieden werden können, mit welchem zuverlässig und elektrisch sicher die Temperatur des Steckers bei hohen Stromstärken überwacht werden kann, und welcher trotzdem einfach und in hoher Stückzahl gefertigt werden kann.

Erfindungsgemäß wird dies durch die Merkmale des Patentanspruches 1 erreicht.

Dadurch ergibt sich der Vorteil, dass eine kritische Wärmeentwicklung des Steckers zuverlässig gemessen werden kann, wobei der Stecker eine hohe elektrische Sicherheit bezüglich der Trennung der beiden Stromkreise bietet, aber trotzdem in hoher Stückzahl einfach herzustellen ist. Durch die Trennwand sind hierbei die Stromkreise mit der Netzspannung und der Versorgungsspannung zuverlässig voneinander großflächig elektrisch Isoliert, auch wenn diese räumlich nahe beieinander liegen. Dadurch entfällt die Notwendigkeit einer zuverlässigen Isolierung des Stromkreises des Temperatursensors, wodurch dieser mit weniger Aufwand hergestellt werden kann. Das Einbauteil mit der Trennwand und der wenigstens einen Wärmebrücke, in welcher der Temperatursensor angeordnet ist, kann hierbei zunächst separat von der Tragplatte vorgefertigt werden, und anschließend mit der Tragplatte verbunden werden. Dadurch ist ein hoher Grad der Automatisierung bei der Herstellung möglich. Weiters kann der Teil des Steckers mit der Tragplatte, Kontaktstiften und elektrischen Leitungen weitgehend unabhängig von dem Einbauteil mit dem Temperatursensor gefertigt werden, und muss nachträglich auch nicht mehr manipuliert werden, wodurch eine Produktion eines Steckers mit Temperatursensoren schnell auf eine Produktion eines Steckers ohne Temperatursensoren umgestellt werden kann. Durch die Wärmebrücke mit der Aufnahme für den Temperatursensor auf der ersten Seite und der Kontaktstelle mit dem Anschlussende an der zweiten Seite kann eine gute thermische Anbindung des Temperatursensors mit den Wärmequellen in dem Stecker gewährleistet werden, wobei durch die Trennwand weiterhin eine gute elektrische Isolierung gegeben ist.

Weiters betrifft die Erfindung ein Verfahren zum Herstellen eines Steckers gemäß dem Oberbegriff des Patentanspruches 12.

Aufgabe der Erfindung ist es daher weiters ein Verfahren anzugeben, mit welchem ein Stecker einfach und in hoher Stückzahl gefertigt werden kann, welcher zuverlässig und elektrisch sicher die Temperatur des Steckers bei hohen Stromstärken überwachen kann.

Erfindungsgemäß wird dies durch die Merkmale des Patentanspruches 12 erreicht.

Die Vorteile des Verfahrens zum Herstellen eines Steckers entsprechen den Vorteilen des Steckers.

Die Unteransprüche betreffen weitere vorteilhafte Ausgestaltungen der Erfindung.

Ausdrücklich wird hiermit auf den Wortlaut der Patentansprüche Bezug genommen, wodurch die Patentansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 Teile einer bevorzugten Ausführungsform des Steckers als Explosionsdarstellung;
Fig. 2 Teile der bevorzugten Ausführungsform des Steckers, wobei die Trennwand abgehoben dargestellt ist, in Seitenansicht;
Fig. 3 die Teile der Fig. 2 in Vorderansicht;
Fig. 4 die Teile der Fig. 2 mit aufgesetzter Trennwand in Seitenansicht;
Fig. 5 die Teile der Fig. 4 in Vorderansicht;
Fig. 6 die Teile der Fig. 4 in Draufsicht;
Fig. 7 die Teile der Fig. 2 inklusive Verkabelung in Vorderansicht;
Fig. 8 die Teile der Fig. 7 in Draufsicht;
Fig. 9 die Teile der Fig. 7 in Seitenansicht; und
Fig. 10 die bevorzugten Ausführungsform des Steckers in Seitenansicht.

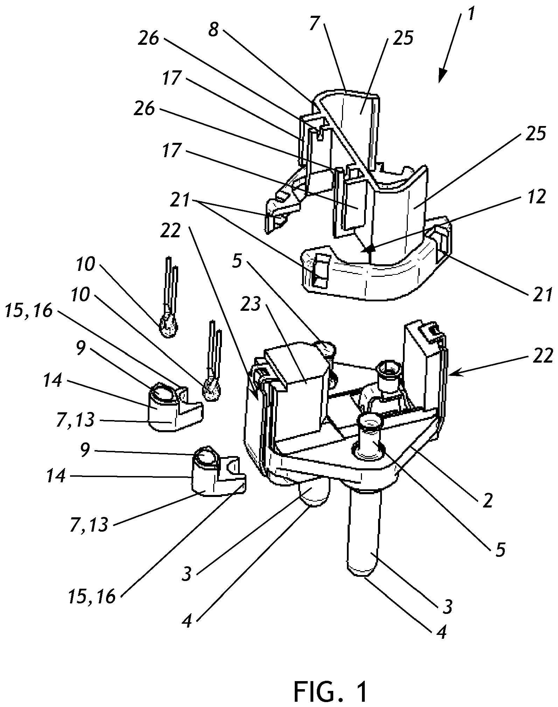

Die Fig. 1 bis 10 zeigen zumindest Teile einer bevorzugten Ausführungsform eines Steckers 1, umfassend eine Tragplatte 2 und wenigstens zwei an der Tragplatte 2 befestigte Kontaktstifte 3, wobei die Kontaktstifte 3 jeweils ein freies Ende 4 und ein Anschlussende 5 aufweisen, wobei elektrische Leiter 11 eines Kabels 6 mit den Anschlussenden 5 der Kontaktstifte 3 verbunden sind, wobei vorgesehen ist, dass ein Einbauteil 7 mit einer Trennwand 8 an der Tragplatte 2 befestigt ist, dass das Einbauteil 7 wenigstens eine, durch wenigstens eine Öffnung 12 der Trennwand 8 verlaufende Wärmebrücke 13 aufweist, dass ein erstes Ende 14 der wenigstens einen Wärmebrücke 13 eine Aufnahme 9 aufweist und ein, dem ersten Ende 14 gegenüberliegendes zweites Ende 15 der Wärmebrücke 13 eines der Anschlussenden 5 kontaktiert, dass in der wenigstens einen Aufnahme 9 ein Temperatursensor 10 angeordnet ist.

Dadurch ergibt sich der Vorteil, dass eine kritische Wärmeentwicklung des Steckers 1 zuverlässig gemessen werden kann, wobei der Stecker 1 eine hohe elektrische Sicherheit bezüglich der Trennung der beiden Stromkreise bietet, aber trotzdem in hoher Stückzahl einfach herzustellen ist. Durch die Trennwand 8 sind hierbei die Stromkreise mit der Netzspannung und der Versorgungsspannung zuverlässig voneinander großflächig elektrisch Isoliert, auch wenn diese räumlich nahe beieinander liegen. Dadurch entfällt die Notwendigkeit einer zuverlässigen Isolierung des Stromkreises des Temperatursensors, wodurch dieser mit weniger Aufwand hergestellt werden kann. Das Einbauteil 7 mit der Trennwand 8 und der wenigstens einen Wärmebrücke 13, in welcher der Temperatursensor 10 angeordnet ist, kann hierbei zunächst separat von der Tragplatte 2 vorgefertigt werden, und anschließend mit der Tragplatte 2 verbunden werden. Dadurch ist ein hoher Grad der Automatisierung bei der Herstellung möglich. Weiters kann der Teil des Steckers 1 mit der Tragplatte 2, Kontaktstiften 3 und elektrischen Leitungen 11 weitgehend unabhängig von dem Einbauteil 7 mit dem Temperatursensor 10 gefertigt werden, und muss nachträglich auch nicht mehr manipuliert werden, wodurch eine Produktion eines Steckers 1 mit Temperatursensoren 10 schnell auf eine Produktion eines Steckers 1 ohne Temperatursensoren 10 umgestellt werden kann. Durch die Wärmebrücke 13 mit der Aufnahme 9 für den Temperatursensor 10 auf der ersten Seite 14 und der Kontaktstelle mit dem Anschlussende 5 an der zweiten Seite 15 kann eine gute thermische Anbindung des Temperatursensors 10 mit den Wärmequellen in dem Stecker 1 gewährleistet werden, wobei durch die Trennwand 7 weiterhin eine gute elektrische Isolierung gegeben ist.

Weiters ist ein Verfahren zum Herstellen des Steckers 1 vorgesehen, wobei wenigstens zwei Kontaktstifte 3 an der Tragplatte 2 befestigt werden, wobei die elektrische Leiter 11 des Kabels 6 mit den Anschlussenden 5 der Kontaktstifte 3 verbunden werden, wobei weiters vorgesehen ist, dass in dem ersten Ende 14 der wenigstens einen Wärmebrücke 13 des Einbauteils 7 die Aufnahme 9 ausgebildet wird, dass in der wenigstens einen Aufnahme 9 der Temperatursensor 10 angeordnet wird, wobei das Einbauteil 7 die Trennwand 8 mit wenigstens einer Öffnung 12 aufweist, und dass das Einbauteil 7 so an der Tragplatte 2 befestigt wird, dass die wenigstens eine Wärmebrücke 13 durch die wenigstens eine Öffnung 12 der Trennwand 8 verläuft und eines der Anschlussenden 5 von dem, dem ersten Ende 14 gegenüberliegendes zweites Ende 15 der Wärmebrücke 13 kontaktiert wird.

Der Stecker 1 ist insbesondere zur Verwendung bei einem Ladegerät zum Laden eines Elektrofahrzeuges vorgesehen. Weiters ist ein Ladegerät zum Laden eines Elektrofahrzeuges mit dem Stecker 1 vorgesehen. Der Stecker 1 ist aber auch zur Verwendung bei anderen Geräten vorteilhaft, insbesondere solche, bei welchen eine Wärmeentwicklung beim Stecker 1 zu erwarten ist.

Der Stecker 1 ist insbesondere eine Steckvorrichtung. Weiters ist der Stecker 1 insbesondere als Netzstecker für ein Niederspannungsnetz von 110 V bis 250 V ausgebildet. Der Stecker 1 kann insbesondere ein Stecker 1 für Lichtstrom sein, also lediglich einen einzigen Kontaktstift 3 für einen Außenleiter aufweisen. Der Stecker 1 kann insbesondere ein 3-poliger Stecker sein. Derartige Stecker 1 für Lichtstrom sind für geringere Leistungen ausgebildet als Stecker für Starkstrom. Besonders bevorzugt kann der Stecker 1 ein Schukostecker sein, oder ein mit dem Schukostecker vergleichbarer standardisierter Stecker, beispielsweise Stecker Typ B oder Stecker Typ G. Steckdosen für derartige Stecker 1 sind im Wesentlichen in jedem Haushalt vorhanden, wodurch das Ladegerät fast überall ansteckbar ist.

Der Stecker 1 weist eine Tragplatte 2 auf, an welcher die Kontaktstifte 3 befestigt, insbesondere durchgeführt sind. Eine derartige Tragplatte 2 wird häufig auch als Steckerbrücke bezeichnet. Die Tragplatte 2 kann aus einem isolierenden Material, insbesondere Kunststoff sein. Die freien Enden 4 der Kontaktstifte 3 sind vorgesehen in eine Steckdose eingeführt zu werden. Hierbei kann eine erste Seite der Tragplatte 2 den freien Enden 4 zugewandt sein. Die Anschlussenden 5 können an einer, der ersten Seite der Tragplatte 2 abgewandten zweiten Seite der Tragplatte 2 oder innerhalb der Tragplatte 2 angeordnet sein.

Die Anschlussenden 5 sind mit elektrischen Leitern 11 verbunden, welche in einem Kabel 6 zusammengeführt werden. Hierbei kann ein erster elektrischer Leiter 11 als Außenleiter, und ein zweiter elektrischer Leiter 11 als Neutralleiter ausgebildet sein. Weiters kann ein, als Schutzleiter ausgebildeter elektrischer Leiter 11 mit seitlichen Kontaktflächen 22 verbunden sein.

Vorgesehen ist, dass ein Einbauteil 7 mit einer Trennwand 8 und wenigstens einer Wärmebrücke 13 an der Tragplatte 2 befestigt ist. Das Einbauteil 7 ist ein elektrisch isolierendes Teil welches in den Stecker 1 durch ein Befestigen an der Tragplatte 2 eingebaut wird.

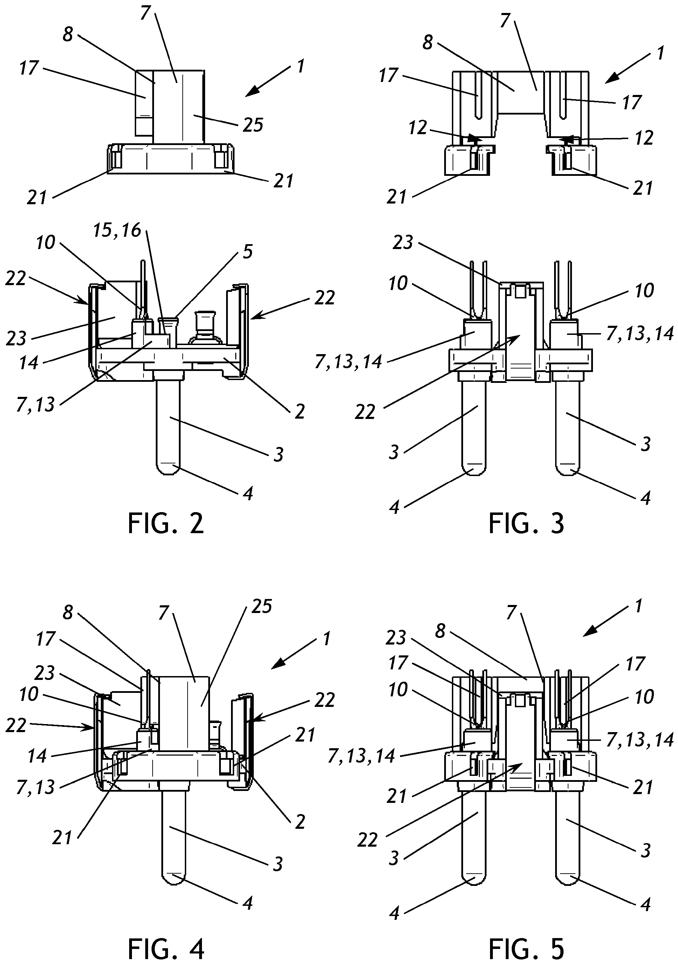

Die wenigstens eine Wärmebrücke 13 weist zwei Enden 14, 15 auf, nämlich ein erstes Ende 14, in welchem der Temperatursensor 10 angeordnet ist, und ein zweites Ende 15, welches das Anschlussende 5 von einem der Kontaktstifte 3 kontaktiert. Erfahrungsgemäß sind vor allem die Anschlussende 5 jene Teile des Steckers 1, an welchen durch den Kontaktwiderstand der elektrischen Leitern 11 mit den Kontaktstiften 3 am ehesten mit einer Wärmeentwicklung zu rechnen ist. Durch die Wärmebrücke 13 kann der wenigstens eine Temperatursensor 10 vorgebbar von dem Anschlussende 5, und damit dem netzspannungsführenden Bereich des Steckers 1 beabstandet werden. In den Fig. 1 bis 3 ist die Trennwand 8 abgehoben dargestellt, damit die Form der Wärmebrücken 13 besser ersichtlich ist. In den Fig. 4 bis 6 ist die Trennwand 8 dagegen am der Tragplatte 8 befestigt.

Das Einbauteil 7 weist weiters eine Trennwand 8 auf, welche einen ersten Innenbereich des Steckers 1 mit den elektrischen Leitern 11, den Anschlussenden 5 und dem zweiten Ende 15 der Wärmebrücke 13, und einen zweiten Innenbereich des Steckers 1 mit den Temperatursensoren 10, dem ersten Ende 14 der Wärmebrücke 13 und den Sensorleitungen 18,19 voneinander trennt. Die Trennwand 8 liegt in einem befestigten Zustand des Einbauteils 7 insbesondere an der, den freien Enden 4 abgewandten ersten Seite der Tragplatte 2 an der Tragplatte 2 an und erstreckt sich von der Tragplatte 2 weg.

Damit die wenigstens eine Wärmebrücke 13 das Anschlussende 5 mit dem, jenseits der Trennwand 8 angeordneten Temperatursensor 10 verbinden kann ist vorgesehen, das die Trennwand 8 wenigstens eine Öffnung 12 aufweist. Die wenigstens eine Öffnung 12 ist zwischen dem ersten Ende 14 und dem zweiten Ende 15 der wenigstens einen Wärmebrücke 13 angeordnet. Die Öffnung 12 kann besonders bevorzugt randoffen sein.

Es kann vorgesehen sein, dass pro Wärmebrücke 13 eine eigene Öffnung 12 vorgesehen ist.

Insbesondere kann vorgesehen sein, dass eine Unterkante der Trennwand 8 abgesehen von der wenigstens einen Öffnung 12 einer Kontur der Tragplatte 2 folgt. Insbesondere kann vorgesehen sein, dass die Tragplatte 2 bei einer der seitlichen Kontaktflächen 22 eine Erhebung 23 aufweist. Hierbei folgt die Unterkante der Trennwand 8 auch der Kontur der Erhebung 23, wobei beidseitig von der Erhebung zwei Öffnungen 12 für zwei Wärmebrücken 13 angeordnet sind.

Bevorzugt kann vorgesehen sein, dass die wenigstens eine Wärmebrücke 13 zwischen der Trennwand 8 und der Tragplatte 2 geklemmt ist.

Das Einbauteil 7 weist weiters wenigstens eine Aufnahme 9 auf, in welcher Aufnahme ein Temperatursensor 10 angeordnet ist. Die Aufnahme 9 ist hierbei an dem ersten Ende 14 der jeweiligen Wärmebrücke 13 ausgebildet. Die Aufnahme 9 ist weiters bevorzugt an einem, einem Anschlussende 5 unmittelbar gegenüberliegenden Bereich der Trennwand 8 angeordnet. Die Aufnahme 9 weist bevorzugt ein Profil auf, welches einem Profil des Temperatursensors 10 entspricht. Weiters kann die Aufnahme 9 den Temperatursensor 10 insbesondere zumindest ringförmig komplett umschließen.

Der Temperatursensor 10 ist dazu vorgesehen eine Temperatur innerhalb des Steckers 1, bevorzugt der Anschlussenden 5 der Kontaktstifte 3 zu messen. Der Temperatursensor 10 kann besonders bevorzugt ein NTC-Sensor sein, wobei auch Alternativen wie ein PTC-Sensor oder andere Sensorarten möglich wären. Bevorzugt kann pro Kontaktstift 3 ein eigener Temperatursensor 10 vorgesehen sein. Der Temperatursensor 10 ist mit Sensorleitungen 18 verbunden, welche insbesondere ebenfalls über das Kabel 6 abgeführt werden können. Die Sensorleitungen ^8 können an einem anderen Ende des Kabels 6 an eine Temperaturregelung anschließbar sein. Insbesondere kann vorgesehen sein, dass Teile des Stromkreises des Temperatursensors 10 bis zu einer Höhe der Trennwand 8 lediglich zum Teil isoliert sind, bevorzugt weitgehend unisoliert sind, wodurch dieser Stromkreis einfacher herzustellen ist.

Die Trennwand 8 und die wenigsten eine Wärmebrücke 13 können insbesondere separate Teile des Einbauteils 7 sein.

Weiters kann vorgesehen sein, dass die Trennwand 8 und die wenigsten eine Wärmebrücke 13 aus unterschiedlichen Materialien ausgebildet sind.

Hierbei kann insbesondere vorgesehen sein, dass das Material der Trennwand 8 eine geringere Wärmeleitfähigkeit aufweist als das Material der wenigstens einen Wärmebrücke 13.

Die Wärmeleitfähigkeit der wenigstens einen Wärmebrücke 13 kann insbesondere mindestens 20 W/mK, bevorzugt mindestens 25 W/mK, betragen. Besonders bevorzugt kann die Wärmeleitfähigkeit der wenigstens einen Wärmebrücke 13 zwischen 20 W/mK und 35 W/mK betragen.

Bevorzugt kann vorgesehen sein, dass das Material der Trennwand 8 duktiler ist als das Material der wenigstens einen Wärmebrücke 13.

Durch eine Kombination dieser beiden Materialeigenschaften ergibt sich der Vorteil, dass die Wärmebrücke 13 primär auf den Wärmetransport hin optimiert werden kann, wobei auf die sonstigen Materialeigenschaften weniger geachtet werden muss, während die restliche Struktur des Einbauteils 7, insbesondere mit der Trennwand 8, einfach herzustellen ist und einen für den Einbau notwendige Flexibilität aufweist.

Besonders bevorzugt kann vorgesehen sein, die wenigstens eine Wärmebrücke 13 aus Keramik ausgebildet ist. Insbesondere kann vorgesehen sein, dass im Wesentlichen lediglich die wenigstens eine Wärmebrücke 13 aus Keramik ausgebildet ist. Hierbei sind Keramiken bekannt, welche eine ausreichend hohe Wärmeleitfähigkeit aufweisen, wodurch diese gut als Material für die wenigstens eine Wärmebrücke 13 geeignet sind.

Insbesondere kann vorgesehen sein, dass die wenigstens eine Wärmebrücke 13 aus einem Oxid, insbesondere Aluminiumoxid, ausgebildet ist. Derartige Materialien sind gut verfügbar und ausreichend gut bearbeitbar.

Alternativ kann vorgesehen sein, dass die wenigstens eine Wärmebrücke 13 aus einem Nitrid, insbesondere Aluminiumnitrid, ausgebildet ist.

Bevorzugt kann vorgesehen sein, dass de die wenigstens eine Wärmebrücke 13 aus einer Aluminiumkeramik ausgebildet ist.

Weiters kann vorgesehen sein, dass zumindest die Trennwand 8 aus Kunststoff ausgebildet ist.

Bevorzugt kann vorgesehen sein, dass das Einbauteil 7 Befestigungsmittel zum Befestigen an der Tragplatte 2 aufweist. Insbesondere kann vorgesehen sein, dass die Trennwand 8 zusammen mit den Befestigungsmittel ein gemeinsames Formteil ausbildet. Insbesondere kann das Formteil aus Kunststoff ausgebildet sein.

Bevorzugt kann vorgesehen sein, dass die wenigstens eine Wärmebrücke 13 mittels der Trennwand 8 an der Tragplatte 2 befestigt ist. Dadurch benötigt die wenigstens eine Wärmebrücke 13 keine weiteren Befestigungsmittel, wodurch diese möglichst einfach ausgebildet sein kann. Weiters ist lediglich in einem einzigen Befestigungsschritt die Befestigung der Trennwand 8 an der Tragplatte 2 notwendig, um auf die Wärmebrücke 13 zu fixieren.

Insbesondere kann vorgesehen sein, dass die wenigstens eine Wärmebrücke 13 flächig auf der Tragplatte 2 aufliegt. Dadurch kann eine bessere Wärmeübertragung zwischen dem Kontaktstift 3 und dem Temperatursensor 10 bereitgestellt werden.

Hierbei kann insbesondere vorgesehen sein, dass eine der Tragplatte 2 zugewandte Unterseite der wenigstens eine Wärmebrücke 13 eben ausgebildet ist. Dadurch kann die wenigstens eine Wärmebrücke 13 besonders gut flächig auf der Tragplatte 2 aufliegen.

Bevorzugt kann vorgesehen sein, dass die wenigstens eine Wärmebrücke 13 aus einem gesinterten Material ausgebildet ist. Hierbei hat sich gezeigt, dass sich die Form gut vorgeben lässt und insbesondere die Unterseite der wenigstens eine Wärmebrücke 13 besonders einfach plan gefertigt werden kann.

Bevorzugt kann vorgesehen sein, dass das Einbauteil 7 mittels einer Clipverbindung 21 an Tragplatte 2 befestigt ist. Hierbei bildet die Clipverbindung dass Befestigungsmittel aus. Die Clipverbindung 21 kann insbesondere an der Trennwand 8 angeformt sein. Durch die Clipverbindung 21 kann der Befestigungsschritt besonders schnell und einfach erfolgen.

An der Trennwand 8 können insbesondere zwei Seitenbereiche 25 um den ersten Innenbereich des Steckers 1 mit den elektrischen Leitern 11 und den Kontaktstiften 3 erstrecken, wobei die Trennwand 8 mit den zwei Seitenbereichen 25 eine im Wesentlichen U-förmige aber randoffene Abgrenzung bilden. Dadurch kann verhindert werden, dass eine freie Litze eines elektrischen Leiters 11 um die Trennwand 8 herum in den ersten Innenbereich des Steckers 1 mit den Temperatursensoren 10 ragt. Weiters wird dadurch das Einbauteil 7 stabiler, und es wird die Gefahr verringert, dass bei dem Einspritzen der Spritzgussummantelung 24 das Einbauteil 7 verschoben wird. Zwei Clipverbinder der Clipverbindung 21 können insbesondere an freien Enden der Seitenbereichen 25 angeordnet sein.

Weiters können Clipverbinder der Clipverbindung 21 an, an den Ausnehmungen angeformten Vorsprüngen angeformt sein.

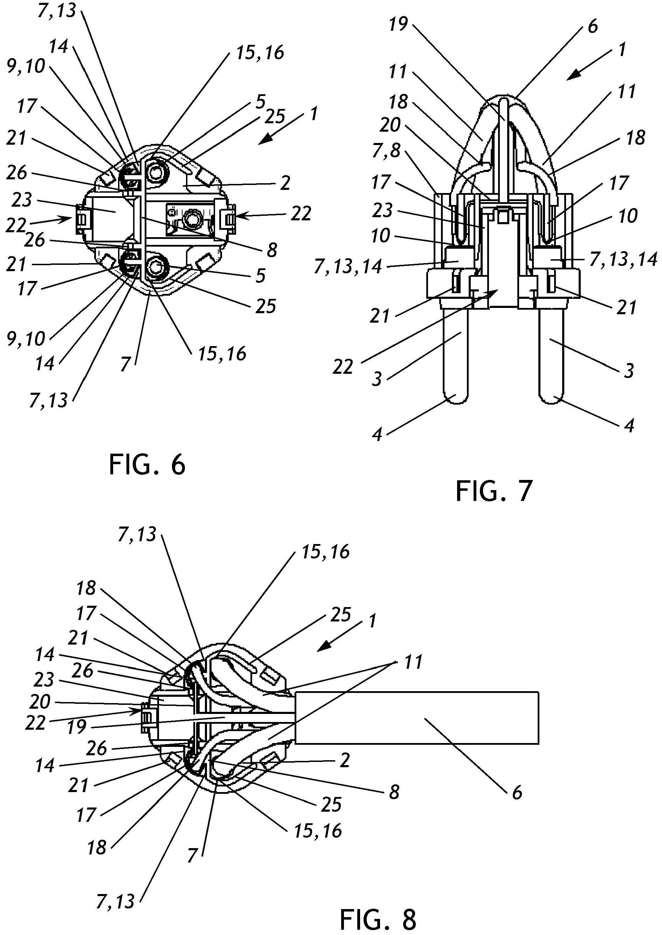

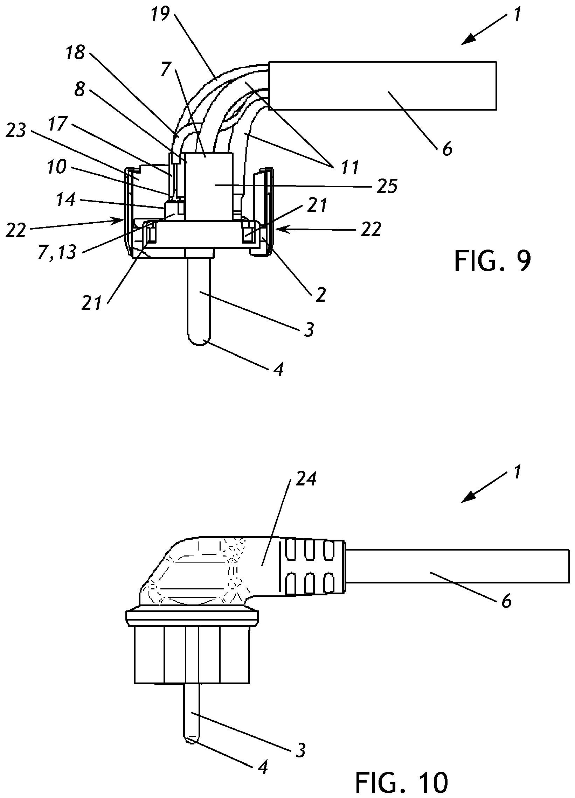

Bevorzugt kann vorgesehen sein, dass der Stecker 1 eine Spritzgussummantelung 24 aufweist. Hierbei wird der Stecker 1 in einem, in den Fig. 7 bis 9 dargestellten Zustand zur Herstellung des fertigen Steckers 1 mit einer Spritzgussummantelung 24 versehen, welche die Tragplatte 2 und das Einbauteil 7 umgibt. In Fig. 10 ist der fertige Stecker 1 der bevorzugten Ausführungsformen dargestellt. Insbesondere das Einbauteil 7 ist komplett von der Spritzgussummantelung 24 umgeben. Die Spritzgussummantelung 24 stellt eine weitverbreitete und kostengünstige Methode zur Erzeugung eines Gehäuses für den Stecker 1 dar. Alternativ könnte allerdings auch ein Gehäuse aus einer harten Schale gefertigt werden.

In der Breite erstreckt sich die Trennwand 8 bevorzugt über die im Wesentlichen gesamte Breite der Tragplatte 2.

In der Höhe erstreckt sich die Trennwand 8 bevorzugt über die Höhe der seitlichen Kontaktflächen 23 hinaus.

Eine Dicke der Trennwand 8 kann maximal 2 mm, bevorzugt maximal 1 mm, besonders bevorzugt maximal 0,5 mm betragen.

Besonders bevorzugt kann vorgesehen sein, dass der Temperatursensor 10 mittels Presspassung mit einer Innenwand der wenigstens einen Aufnahme 9 in thermischen Kontakt ist. Durch die Presspassung ist ein guter und gleichbleibender thermischer Kontakt zwischen dem Temperatursensor 10 und dem Einbauteil 7 sichergestellt, wobei nicht die Gefahr besteht, dass durch etwaige Lufteinschlüsse der thermische Kontakt unvorhersehbar herabgesetzt wird. Weiters ist die Fertigung besonders einfach, da der Temperatursensor 10 lediglich mit einer ausreichenden Kraft in die wenigstens eine Aufnahme 9 gepresst werden braucht.

Die wenigstens eine Aufnahme 9 kann insbesondere als Sackloch ausgebildet sein.

Die wenigstens eine Aufnahme 9 kann besonders bevorzugt an der, der Tragplatte 2 abgewandten Seite offen sein.

Weiters kann vorgesehen sein, dass sich die Aufnahme 9 in Bezug zu einer Oberkante der Öffnung noch mindestens 1 mm, bevorzugt mindestens 2 mm, von der Tragplatte 2 aus weg erstreckt. Dadurch kann die Kriechstrecke zwischen den netzspannungsführenden Teilen des Steckers 1 und dem Temperatursensor bzw. den Sensorleitungen 18 weiter vergrößert werden.

Alternativ kann vorgesehen sein, dass die Aufnahme 9 zur Tragplatte hin offen ist, wobei in diesem Fall die Aufnahme 9 an deren Rückseite Auslässe für die Sensorleitungen 18 benötigt.

Insbesondere kann vorgesehen sein, dass zu jedem der wenigstens zwei Kontaktstiften 3 eine zugeordnete Wärmebrücke 13 mit einem Temperatursensor 10 aufscheint. Im Falle von zwei Kontaktstiften 3 können daher zwei Wärmebrücken 13 mit jeweils einem Temperatursensor 10 vorgesehen sein. Dadurch kann einerseits zuverlässig erkannt werden, wenn eine der beiden Anschlussenden 5 eine vorgegebene Temperatur überschreitet. Weiters wird dadurch verhindert, dass sich über die Oberfläche der Wärmebrücken 13 Kriechströme zwischen den beiden Anschlussenden 5 ausbilden, da die einzelnen Wärmebrücken 13 voneinander getrennt sind.

Insbesondere kann vorgesehen sein, dass das wenigstens eine Anschlussende 5 als Crimpstelle ausgebildet ist. Eine Crimpstelle ist dazu vorgesehen eine Verbindung zwischen dem Kontaktstift 3 und dem jeweiligen elektrische Leiter 11 mittels Crimpen herzustellen. Mittels einer Crimpstelle kann auf einfache Weise eine zuverlässige elektrische Anbindung zwischen dem Kontaktstift 3 und dem jeweiligen elektrische Leiter 11 hergestellt werden.

Besonders bevorzugt kann vorgesehen sein, dass an dem zweiten Ende 15 der wenigstens einen Wärmebrücke 13 eine randoffene Nut 16 ausgebildet ist, und dass die randoffene Nut 16 das Anschlussende 5 teilweise umschließt. Die randoffene Nut 16 und das Anschlussende 5 können insbesondere derart geformt sein, dass die randoffene Nut 16 und das Anschlussende 5 hinterschneidungsfrei umschließt. Durch die randoffene Nut 16 kann das zweite Ende 15 seitlich an das Anschlussende 5 herangeführt werden, wodurch das Anschlussende 5 bereits mit dem elektrischen Leiter 11 verbunden sein kann. Dadurch kann das Einbauteil 7 einfacher spät bei der Fertigung des Steckers 1 an der Tragplatte 2 befestigt werden. Weiters kann eine große Kontaktfläche für die Wärmeübertragung zwischen dem Anschlussende 5 und der Wärmebrücke 13 bereitgestellt werden. Weiters kann dadurch einfacher eine herkömmliche Tragplatte 2 verwendet werden, welche nicht besonders an den Einbau des Einbauteils 7 angepasst sein muss. Die randoffene Nut 16 ist in Fig. 1 gut ersichtlich. Die randoffene Nut 15 kann insbesondere gabelförmig sein.

Insbesondere kann vorgesehen sein, dass das zweite Ende 15 der wenigstens einen Wärmebrücke 13 beim Befestigen des Einbauteils 7 an der Tragplatte 2 seitlich an das jeweilige Anschlussende 5 herangeführt wird. Hierbei kann die Wärmebrücke 13 seitlich an dem Anschlussende 5 anliegen. Dies ist besonders vorteilhaft, wenn das Anschlussende 5 als Crimpstelle ausgebildet ist, da sich eine Crimpstelle an der, der Tragplatte 2 abgewandten Seite hin aufweitet.

Bevorzugt kann vorgesehen sein, dass die randoffene Nut 16 gegengleich zu einem Teil des zugeordneten Anschlussendes 5 geformt ist.

Bevorzugt kann vorgesehen sein, dass ein Sensornullleiter 19 mit einem Leiterbügel 20 verbunden ist, und dass der Leiterbügel 20 mit wenigstens zwei Temperatursensoren 10 elektrisch verbunden ist. Der Sensornullleiter 19 verbindet ein Nullpotenzial mit den Temperatursensoren 10. Bei einem Betrieb des Temperatursensors 10 mit Gleichstrom kann der Sensornullleiter 19 als Masse angesehen werden. Der Leiterbügel 20 kann insbesondere unisoliert sein, sodass der Sensornullleiter 19 einfach mit diesem verbunden werden kann. Der Leiterbügel 20 bildet hierbei ebenfalls einen Teil der Sensorleitungen 18. Durch die Bügelform kann der Leiterbügel 20 über die Erhebung 23 an den seitlichen Kontaktflächen 22 vorbeigeführt werden.

Der Leiterbügel 20 kann insbesondere durch ein Abwinkeln und anschließendes Verbinden jeweils eines Kontaktpins von zwei Temperatursensoren 10 hergestellt werden. Alternativ kann der Leiterbügel 20 durch einen zusätzlichen, mit jeweils einem Kontaktpin von wenigstens zwei Temperatursensoren 10 verbundenen Leiter, ausgebildet sein.

Bevorzugt ist das Einbauteil 7 gegenüber einem ersten Innenbereich des Steckers 1 mit den elektrischen Leitern 11 der Kontaktstifte 3 randoffen ausgebildet, sodass das Einbauteil 7 in einem Herstellungszustand des Steckers 1 an die Tragplatte befestigt werden kann, wenn die elektrischen Leiter 11 bereits mit den Kontaktstiften 3 verbunden sind. Dadurch können die üblichen Herstellungsschritte für einen Stecker 1 ohne Temperatursensor 10 unverändert beibehalten werden.

Insbesondere kann vorgesehen sein, dass an der Trennwand 8 bei der wenigstens einen Aufnahme 9 eine Rippe 17 angeformt ist, und dass die Rippe 17 zwischen zwei mit dem Temperatursensor 10 verbundene Sensorleitungen 18 angeordnet ist. Insbesondere kann bei jeder Aufnahme 9 eine Rippe 17 angeformt sein. Die Rippe 17 hat hierbei die Form eines länglichen und entlang der Trennwand 8 verlaufenden Fortsatzes. Die Rippe 17 kann insbesondere von der Aufnahme 9 bis zu einem oberen Ende der Trennwand 8 verlaufen. Die Rippe 17 trennt zuverlässig die beiden Sensorleitungen 18 eines der Temperatursensoren 10 voneinander, sodass nicht die Gefahr besteht, dass bei dem Einspritzen der Spritzgussummantelung 24 ein Temperatursensor 10 kurzgeschlossen wird.

Weiters kann vorgehen sein, dass die Rippe 17 den Temperatursensor 10 in der zugeordneten Aufnahme 9, insbesondere formschlüssig, hält.

Bevorzugt kann vorgesehen sein, dass die Temperatursensoren 10 über jeweils eine getrennte Spannungsversorgung über eine eigene Sensorleitung 18 verfügen. Dadurch kann besser erkannt werden, wenn es bei einem Kontaktstift 3, beispielweise aufgrund eines erhöhten Kontaktwiderstandes, zu einer kritischen Wärmeentwicklung kommt. Alternativ können die Temperatursensoren 10 in Serie oder parallel zueinander geschaltet sein, und über eine gemeinsame Sensornullleiter 19 und eine gemeinsame Spannungsversorgung verfügen.

Besonders bevorzugt kann vorgesehen sein, dass an der Trennwand eine wenigstens eine Auflage 26 angeformt ist, um welche die Sensorleitung 18, insbesondere der Leiterbügel 20, abgewinkelt ist. Dadurch kann die Sensorleitung 18 vor dem Befestigen des Einbauteils 7 bereits derart verlegt werden, dass diese um die Erhebung 23 herum geführt wird.

Die Auflage 26 kann hierbei ein Teil eines weiteren, insbesondere parallel zu der Rippe 17 verlaufenden Fortsatzes sein.

Bei dem Verfahren zum Herstellen des Steckers 8 kann vorgesehen sein, dass das Einbauteil 7 umfassend die Trennwand 8 die wenigstens einen Wärmebrücke 13 und dem wenigstens einen Temperatursensor 10 vorgefertigt wird, dass die Tragplatte 2 mit den Kontaktstiften 3 vorgefertigt wird, und dass in einem Befestigungsschritt im Wesentlichen der komplette Einbauteil 7 an der Tragplatte 2 befestigt wird.

Die elektrischen Leiter 11 können insbesondere vor dem Befestigungsschritt des Einbauteils 7 mit den Kontaktstiften 3 verbunden werden. Alternativ kann dies auch nach dem Befestigungsschritt des Einbauteils 7 erfolgen.

Besonders bevorzugt kann vorgesehen sein, dass das Einbauteil 7 beim Befestigungsschritt zuerst schräg auf der Tragplatte 2 aufgesetzt, und erst dann in einer Kippbewegung befestigt wird. Hierbei kann insbesondere das Einbauteil 7 zuerst an jener Seite aufgesetzt werden, an welcher die Temperatursensoren 10 angeordnet sind. Durch diese Kippbewegung kann das zweite Ende 15 der wenigstens einen Wärmebrücke einfach seitlich an das, insbesondere als Crimpstelle ausgebildete, Anschlussende 5, herangeführt werden.

## Patentansprüche

1. Stecker (1), umfassend eine Tragplatte (2) und wenigstens zwei an der Tragplatte (2) befestigte Kontaktstifte (3), wobei die Kontaktstifte (3) jeweils ein freies Ende (4) und ein Anschlussende (5) aufweisen, wobei die Anschlussenden (5) der Kontaktstifte (3) mit elektrischen Leitern (11) eines Kabels (6) verbindbar sind, wobei ein Einbauteil (7) an der Tragplatte (2) befestigt ist, wobei das Einbauteil (7), wenigstens eine Wärmebrücke (13) aufweist, wobei ein erstes Ende (14) der wenigstens einen Wärmebrücke (13) eine Aufnahme (9) aufweist und ein, dem ersten Ende (14) gegenüberliegendes zweites Ende (15) der Wärmebrücke (13) eines der Anschlussenden (5) kontaktiert, wobei in der wenigstens einen Aufnahme (9) ein Temperatursensor (10) angeordnet ist, **dadurch gekennzeichnet, dass** das Einbauteil (7) eine Trennwand (8) aufweist, und dass die wenigstens eine Wärmebrücke durch wenigstens eine Öffnung (12) der Trennwand (8) verläuft.

2. Stecker (1) nach Anspruch 1, **dadurch gekennzeichnet, dass** die wenigstens eine Wärmebrücke (13) aus Keramik ausgebildet ist.

3. Stecker (1) nach Anspruch 1, **dadurch gekennzeichnet, dass** die wenigstens eine Wärmebrücke (13) aus einem Oxid, insbesondere Aluminiumoxid, ausgebildet ist.

4. Stecker (1) nach Anspruch 1 oder 3, **dadurch gekennzeichnet, dass** zumindest die Trennwand (8) aus Kunststoff ausgebildet ist.

5. Stecker (1) nach einem der Ansprüche 1 bis 4, **dadurch gekennzeichnet, dass** an dem zweiten Ende (15) der wenigstens einen Wärmebrücke (13) eine randoffene Nut (16) ausgebildet ist, und dass die randoffene Nut (16) das Anschlussende (5) teilweise umschließt.

6. Stecker (1) nach einem der Ansprüche 1 bis 5, **dadurch gekennzeichnet, dass** das wenigstens eine Anschlussende (5) als Crimpstelle ausgebildet ist.

7. Stecker (1) nach einem der Ansprüche 1 bis 6, **dadurch gekennzeichnet, dass** zu jedem der wenigstens zwei Kontaktstiften (3) eine zugeordnete Wärmebrücke (13) mit einem Temperatursensor (10) aufscheint.

8. Stecker (1) nach einem der Ansprüche 1 bis 7, **dadurch gekennzeichnet, dass** an der Trennwand (8) bei der wenigstens einen Aufnahme (9) eine Rippe (17) angeformt ist, und dass die Rippe (17) zwischen zwei mit dem Temperatursensor (10) verbundene Sensorleitungen (18) angeordnet ist.

9. Stecker (1) nach einem der Ansprüche 1 bis 8, **dadurch gekennzeichnet, dass** der Stecker (1) einen mit einem Sensornullleiter (19) verbindbaren Leiterbügel (20) umfasst, und dass der Leiterbügel (20) mit wenigstens zwei Temperatursensoren (10) elektrisch verbunden ist.

10. Stecker (1) nach einem der Ansprüche 1 bis 9, **dadurch gekennzeichnet, dass** die wenigstens eine Wärmebrücke (13) mittels der Trennwand (8) an der Tragplatte (2) befestigt ist.

11. Stecker (1) nach einem der Ansprüche 1 bis 10, **dadurch gekennzeichnet, dass** das Einbauformteil (7) mittels einer Clipverbindung (21) an Tragplatte (2) befestigt ist.

12. Verfahren zum Herstellen eines Steckers (1), wobei wenigstens zwei Kontaktstifte (3) an einer Tragplatte (2) befestigt werden, wobei die Anschlussenden (5) der Kontaktstifte (3) mit elektrischen Leitern (11) eines Kabels (6) verbindbar sind, wobei in einem ersten Ende (14) wenigstens einer Wärmebrücke (13) eines Einbauteils (7) eine Aufnahme (9) ausgebildet wird, wobei in der wenigstens einen Aufnahme (9) ein Temperatursensor (10) angeordnet wird, **dadurch gekennzeichnet, dass** das Einbauteil (7) eine Trennwand (8) mit wenigstens einer Öffnung (12) aufweist, und dass das Einbauteil (7) so an der Tragplatte (2) befestigt wird, dass die wenigstens eine Wärmebrücke (13) durch die wenigstens eine Öffnung (12) der Trennwand (8) verläuft und eines der Anschlussenden (5) von einem, dem ersten Ende (14) gegenüberliegendes zweites Ende (15) der Wärmebrücke (13) kontaktiert wird.

13. Verfahren nach Anspruch 12, **dadurch gekennzeichnet, dass** das zweite Ende (15) der wenigstens einen Wärmebrücke (13) beim Befestigen des Einbauteils an der Tragplatte (2) seitlich an das jeweilige Anschlussende (5) herangeführt wird.

## Claims

1. Connector (1), comprising a support plate (2) and at least two contact pins (3) fastened to the support plate (2), wherein the contact pins (3) each have a free end (4) and a terminal end (5), wherein the terminal ends (5) of the contact pins (3) are connectable to electrical conductors (11) of a cable (6), wherein an installation part (7) is fastened to the support plate (2), wherein the installation part (7) has at least one thermal bridge (13), wherein a first end (14) of the at least one thermal bridge (13) has a receptacle (9) and a second end (15), which is opposite the first end (14), of the thermal bridge (13) makes contact with one of the terminal ends (5), wherein a temperature sensor (10) is arranged in the at least one receptacle (9), **characterized in that** the installation part (7) has a partition wall (8), and **in that** the at least one thermal bridge extends through at least one opening (12) of the partition wall (8).

2. Connector (1) according to claim 1, **characterized in that** the at least one thermal bridge (13) is formed from ceramic.

3. Connector (1) according to claim 1, **characterized in that** the at least one thermal bridge (13) is formed from an oxide, in particular aluminum oxide.

4. Connector (1) according to claim 1 or 3, **characterized in that** at least the partition wall (8) is made of plastic.

5. Connector (1) according to one of claims 1 to 4, **characterized in that** an open-edge groove (16) is formed at the second end (15) of the at least one thermal bridge (13), and **in that** the open-edge groove (16) partially encloses the terminal end (5).

6. Connector (1) according to one of claims 1 to 5, **characterized in that** the at least one terminal end (5) is designed as a crimping point.

7. Connector (1) according to one of claims 1 to 6, **characterized in that** an associated thermal bridge (13) with a temperature sensor (10) appears for each of the at least two contact pins (3).

8. Connector (1) according to one of claims 1 to 7, **characterized in that** a rib (17) is formed on the partition wall (8) at the at least one receptacle (9), and **in that** the rib (17) is arranged between two sensor lines (18) connected to the temperature sensor (10).

9. Connector (1) according to one of claims 1 to 8, **characterized in that** the connector (1) comprises a conductor bracket (20) which can be connected to a sensor neutral conductor (19), and **in that** the conductor bracket (20) is electrically connected to at least two temperature sensors (10).

10. Connector (1) according to one of claims 1 to 9, **characterized in that** the at least one thermal bridge (13) is fixed to the support plate (2) by means of the partition wall (8).

11. Connector (1) according to one of claims 1 to 10, **characterized in that** the installation shaped part (7) is fastened to the support plate (2) by means of a clip connection (21).

12. Method for producing a connector (1), wherein at least two contact pins (3) are fastened to a support plate (2), wherein the terminal ends (5) of the contact pins (3) are connectable to electrical conductors (11) of a cable (6), wherein a receptacle (9) is formed in a first end (14) of at least one thermal bridge (13) of an installation part (7), wherein a temperature sensor (10) is arranged in the at least one receptacle (9), **characterized in that** the installation part (7) has a partition wall (8) with at least one opening (12), and **in that** the installation part (7) is fastened to the support plate (2) in such a way that the at least one thermal bridge (13) extends through the at least one opening (12) of the partition wall (8) and one of the terminal ends (5) is contacted by a second end (15), which is opposite the first end (14), of the thermal bridge (13).

13. Method according to claim 12, **characterized in that** the second end (15) of the at least one thermal bridge (13) is brought laterally to the respective terminal end (5) during fastening of the installation part to the support plate (2).

## Revendications

1. Connecteur (1) comprenant une platine de support (2) et au moins deux broches de contact (3) fixées à la platine de support (2), dans lequel les broches de contact (3) présentent chacune une extrémité libre (4) et une extrémité de branchement (5), les extrémités de branchement (5) des broches de contact (3) pouvant être connectées à des conducteurs électriques (11) d'un câble (6), dans lequel un insert (7) est fixé sur la platine de support (2), l'insert (7) comportant au moins un pont thermique (13), une première extrémité (14) de l'au moins un pont thermique (13) présentant un réceptacle (9) et une deuxième extrémité (15) du pont thermique (13) opposée à la première extrémité (14) venant en contact avec l'une des extrémités de branchement (5), un capteur de température (10) étant disposé dans l'au moins un réceptacle (9), **caractérisé en ce que** l'insert (7) présente une cloison de séparation (8) et **en ce que** l'au moins un pont thermique passe à travers au moins une ouverture (12) de la cloison de séparation (8).

2. Connecteur (1) selon la revendication 1, **caractérisé en ce que** l'au moins un pont thermique (13) est fait de céramique.

3. Connecteur (1) selon la revendication 1, **caractérisé en ce que** l'au moins un pont thermique (13) est fait d'un oxyde, en particulier d'oxyde d'aluminium.

4. Connecteur (1) selon la revendication 1 ou 3, **caractérisé en ce que** la cloison de séparation (8), au moins, est faite de matière plastique.

5. Connecteur (1) selon l'une des revendications 1 à 4, **caractérisé en ce qu'**une gorge (16) ouverte sur le bord est formée à la deuxième extrémité (15) de l'au moins un pont thermique (13) et **en ce que** la gorge (16) ouverte sur le bord entoure partiellement l'extrémité de branchement (5).

6. Connecteur (1) selon l'une des revendications 1 à 5, **caractérisé en ce que** l'au moins une extrémité de branchement (5) est conformée comme un sertissage.

7. Connecteur (1) selon l'une des revendications 1 à 6, **caractérisé en ce qu'**un pont thermique (13) muni d'un capteur de température (10) est associé à chacune des au moins deux broches de contact (3).

8. Connecteur (1) selon l'une des revendications 1 à 7, **caractérisé en ce qu'**une nervure (17) est formée sur la cloison de séparation (8) près de l'au moins un réceptacle (9) et **en ce que** la nervure (17) est disposée entre deux lignes de capteur (18) associées au capteur de température (10).

9. Connecteur (1) selon l'une des revendications 1 à 8, **caractérisé en ce que** le connecteur (1) comprend un étrier conducteur (20) pouvant être connecté à un conducteur neutre de capteur (19) et **en ce que** l'étrier conducteur (20) est connecté électriquement à au moins deux capteurs de température (10).

10. Connecteur (1) selon l'une des revendications 1 à 9, **caractérisé en ce que** l'au moins un pont thermique (13) est fixé sur la platine de support (2) au moyen de la cloison de séparation (8).

11. Connecteur (1) selon l'une des revendications 1 à 10, **caractérisé en ce que** l'insert moulé (7) est fixé sur la platine de support (2) au moyen d'un assemblage clipsé (21).

12. Procédé de fabrication d'un connecteur (1), dans lequel au moins deux broches de contact (3) sont fixées sur une platine de support (2), dans lequel les extrémités de branchement (5) des broches de contact (3) peuvent être connectés avec des conducteurs électriques (11) d'un câble (6), dans lequel au moins un réceptacle (9) est formé dans une première extrémité (14) d'au moins un pont thermique (13) d'un insert (7), dans lequel un capteur de température (10) est disposé dans l'au moins un réceptacle (9), **caractérisé en ce que** l'insert (7) présente une cloison de séparation (8) avec au moins une ouverture (12) et **en ce que** l'insert (7) est fixé sur la platine de support (2) de telle manière que l'au moins un pont thermique (13) passe à travers l'au moins une ouverture (12) de la cloison de séparation (8) et qu'une des extrémités de branchement (5) vienne en contact avec une deuxième extrémité (15) du pont thermique (13) opposée à la première extrémité (14).

13. Procédé selon la revendication 12, **caractérisé en ce que** la deuxième extrémité (15) de l'au moins un pont thermique (13) est amenée sur le côté de l'extrémité de branchement (5) correspondante lors de la fixation de l'insert sur la platine de support (2).
